# EUROPÄISCHE PATENTANMELDUNG

(11) **EP 0 646 890 A1**
(43) Veröffentlichungstag der Anmeldung: **05.04.1995**
(21) Anmeldenummer: 94114967.6
(22) Anmeldetag: 22.09.1994
(51) Int. Cl.: G06K 17/00, G09F 3/00

(54) **Verfahren zum Zuordnen von Patientenproben und/oder Messergebnissen von Patienten**

(30) Priorität: 01.10.1993 DE 4333615
(71) Anmelder: Kratzer, Michael, Dr., D-80802 München (DE); Freiherr von der Goltz, Volker, D-83370 Seeon (DE)
(72) Erfinder: Kratzer, Michael, Dr., D-80802 München (DE); Freiherr von der Goltz, Volker, D-83370 Seeon (DE)
(74) Vertreter: von Puttkamer, Nikolaus, Dipl.-Ing. Patentanwälte Haft, von Puttkamer Berngruber, Czybulka

(57) **Zusammenfassung**

Die Erfindung betrifft ein Verfahren zum Zuordnen von Patientenproben und/oder Meßergebnissen von Patienten, wobei Patienteninformationen auf einem Datenträger angeordnet sind. Der Datenträger weist die Form einer Speichereinrichtung (1) auf, die während des Aufenthaltes des Patienten in einem Krankenhaus, einer Klinik oder dergleichen beim Patienten verbleibt. Vorzugsweise wird die Speichereinrichtung (1) an einem am Arm des Patienten oder am Hals des Patienten befestigt.

## Beschreibung

Die Erfindung betrifft ein Verfahren zum Zuordnen von Patientenproben und/oder Meßergebnissen von Patienten nach dem Oberbegriff des Patentanspruches 1.

Derzeit ist es üblich, in der Praxis oder in Krankenhäusern bzw. Kliniken den Patienten nach ihrer Aufnahme Klebeetiketten als Datenträger auszuhändigen, die beispielsweise neben dem Patientennamen mit einem Barcode versehen sind, in dem die wichtigsten Patienteninformationen (z.B. Patientennummern) enthalten sind. Beim Durchlaufen verschiedener Stationen werden dann diese Etiketten von den Schwestern bzw. dem Krankenhauspersonal zur Kennzeichnung auf verschiedenen Gegenstände, wie beispielsweise auf einen Blutprobenbehälter, ein Röntgenbild etc. aufgeklebt.

Ein Problem besteht dabei darin, daß beim Zusammenführen beispielsweise einer Blutprobe mit dem entsprechenden Etikett durch das Personal Fehler verursacht werden können, die zu schwerwiegende Folgen für den Patienten führen können. Beispielsweise können auf diese Art durch menschliches Versagen Blutproben falschen Patienten zugeordnet werden. Dies hat schon zu Todesfällen geführt.

Die Aufgabe der vorliegenden Erfindung besteht daher darin, ein Verfahren zum Zuordnen von Patientenproben und/oder Meßergebnissen eines Patienten anzugeben, durch das eine Verwechslung der Meßergebnisse weitgehendst unmöglich gemacht wird.

Diese Aufgabe wird durch ein Verfahren der eingangs genannten Art gelöst, das durch die in dem kennzeichnenden Teil des Patentanspruches 1 angegebenen Merkmale gekennzeichnet ist.

Der wesentliche Vorteil der vorliegenden Erfindung besteht darin, daß bei der Identifizierung und Zuordnung von z.B. Blutproben, Röntgenbildern, Ultraschallbildern, EKG- oder EEG-Ergebnissen zu einzelnen Patienten Fehler ausgeschlossen werden, die zu schwerwiegenden Folgen für die Patienten führen könnten.

Ein weiterer Vorteil besteht darin, daß das erfindungsgemäße System relativ einfach aufgebaut und leicht handhabbar ist. Vorteilhafterweise besteht das vorliegende System im wesentlichen aus auf dem Markt verfügbaren Elementen.

Weitere vorteilhafte Ausgestaltungen der Erfindung gehen aus den Unteransprüche hervor.

Im folgenden werden die Erfindung und deren Ausgestaltungen im Zusammenhang mit den Figuren näher erläutert. Es zeigen:
- Fig. 1: in schematischer Darstellung eine Speichereinrichtung, die ein Patient während seines Aufenthaltes, z.B. in einer Klinik, bei sich führt;
- Fig. 2: am Beispiel der Entnahme einer Blutprobe das Auslesen der Patienteninformationen aus der Speichereinrichtung und die Verknüpfung der Patienteninformationen mit weiteren Daten zur Erzeugung eines auf einem Blutprobenbehälter befestigbaren Etiketts;
- Fig. 3: eine besonders bevorzugte Art der Anbringung von Informationen an einen Blutprobenbehälter und
- Fig. 4: die Verarbeitung der auf dem Blutprobenbehälter vorhandenen Informationen im Labor.

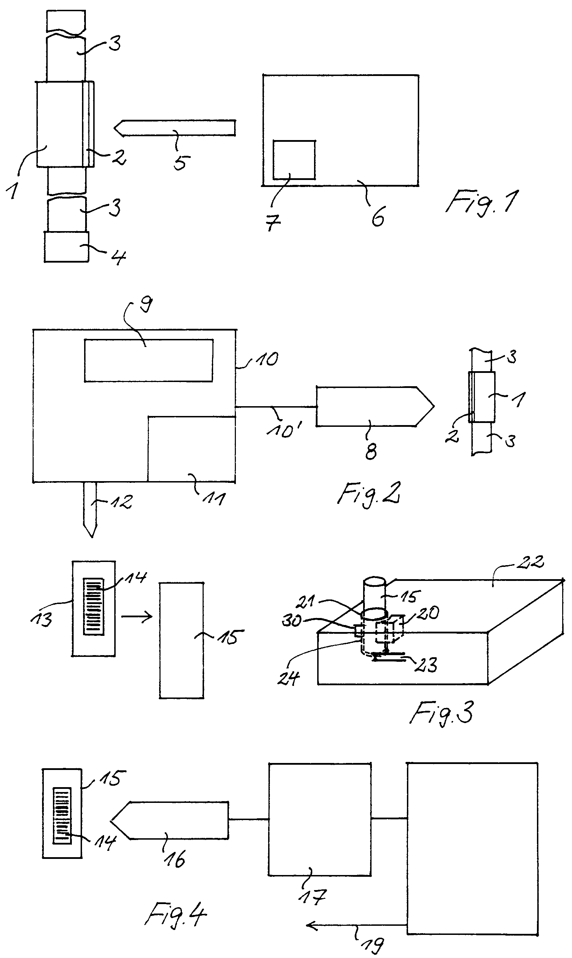

Bei dem vorliegenden System wird dem Patienten bei der Patientenaufnahme in einem Krankenhaus, einer Klinik oder einer Praxis eine Speichereinrichtung 1 zugeordnet, die während seines Aufenthaltes beim Patienten verbleibt. Beispielsweise ist die Speichereinrichtung 1 in der aus der Figur 1 ersichtlichen Form an einem Armband 3 oder dergleichen befestigt, das mit Hilfe einer Verschlußeinrichtung 4 fest am Handgelenk des Patienten angeordnet werden kann. Ebensogut ist es beispielsweise denkbar, die Speichereinrichtung 1 mit einer Kette zu versehen, so daß sie um den Hals getragen werden kann. Es wird zweckmäßigerweise dafür Sorge getragen, daß die Speichereinrichtung stabil und vorzugsweise wasserdicht ist, damit z.B. beim Baden des Patienten keine Beschädigungen der Speichereinrichtung 1 auftreten. Bevorzugt ist eine Ausführungsform bei der es dem Patienten selbst nicht möglich ist, die Speichereinrichtung 1 während des Klinikaufenthaltes von seinem Körper zu entfernen. Sie kann daher weder verlorengehen, noch vertauscht werden. Beispielsweise kann dies dadurch erreicht werden, daß das genannte Armband 3 nach dem Anlegen vernietet wird, so daß der Patient es nicht öffnen kann.

Die Speichereinrichtung 1 weist ein Speichermedium 2 auf, in dem Patienteninformationen, wie eine Patientenidentifikationsnummer und Patientendaten, wie z.B. der Name, der Vorname und das Geburtsdatum sowie die Krankenkasse des Patienten, gespeichert werden können. Beispielsweise weist das Speichermedium 2 die Form eines Magnetstreifens auf, in dem die Patientendaten bei der Aufnahme des Patienten zusammen mit einer Patientenidentifikationsnummer von einem Eingabegerät 6 aus, vorzugsweise unter Zuhilfenahme einer Tastatur 7 eingeschrieben werden. Wie schon gesagt, verbleibt die so geladene Speichereinrichtung 1 während des Krankenhausaufenthaltes des Patienten bei diesem.

Bei einer Blutrobenabnahme wird entsprechend der Figur 2 vorgegangen. Mit der Hilfe einer Scannereinrichtung 8 werden aus dem Magnetstreifen 2 der Speichereinrichtung 1 die Patientenidentifikationsnummer und die Patientendaten ausgelesen und in eine Recheneinheit 10 eingelesen. In dieser Recheneinheit 10 werden die aus dem Magnetstreifen 2 ausgelesenen Daten (Patientenidentifikationsnummer und Patientendaten) mit Zeitdaten, die aus einem Zeitglied 9 der Recheneinheit 10 ausgelesen werden und mit weiteren Daten verknüpft, die über eine Tastatur 11 eingegeben werden. Diese weiteren Daten betreffen Informationen über Probenanforderungen bzw. Probenprioritäten (z.B. Notfall-, Routine- oder Überwachungsuntersuchung). Beispielsweise wird über die Tastatur 11 eine Bestimmungsinformation, wie z.B. ein eine Natrium- oder Kaliumbestimmung kennzeichender Code eingegeben. Die auf diese Weise verknüpften Daten werden aus der Recheneinheit 10 in der Form eines weiteren Datenträgers, vorzugsweise in der Form eines auf einem Klebeetikett 13 angeordneten Barcodes 14 ausgedruckt. Es wird darauf hingewiesen, daS die verknüpften Daten auch in anderen Formen, z.B. in einem Magnetstreifen oder in einem RAM-Speicher, jeweils auf einem geeigneten Träger aus der Recheneinheit 10 ausgegeben werden können. Das Klebeetikett 13 wird auf einem die entnommene Blutprobe enthaltenden Blutprobenbehälter 15 aufgeklebt. Um bei diesem Vorgang mögliche Verwechslungen von Blutproben auszuschließen, wird vorzugsweise dafür Sorge getragen, daß die elektrische Leitung 10' zwischen der Scannereinrichtung 8 und der Recheneinheit 10 eines Arbeitsplatzes der Blutprobenentnahmestation so kurz bemessen ist, daß sie nicht bis zum Arbeitsbereich der benachbarten Blutprobenentnahmestationen reicht. Es können daher die Scannereinrichtungen 8 der verschiedenen Stationen nicht vertauscht werden.

Ferner wird in der Recheneinheit 10 dafür Sorge getragen, daß die dort zwischengespeicherten Daten (Patientenidentifikationsnummer, Patientendaten, Zeitdaten und Bestimmungsdaten) sofort gelöscht werden, wenn das Etikett 13 ausgedruckt ist. Dadurch wird verhindert, daß diese Daten irrtümlich auf ein später ausgedrucktes Etikett übertragen werden.

Gemäß Figur 3 ist es denkbar an der Stelle der beschriebenen Recheneinheit 10 eine Recheneinheit 22 vorzusehen, die eine Öffnung 21 oder dergleichen zum Einführen eines gefüllten Blutprobenbehälters 15 aufweist. Dies bedeutet, daß nach der Entnahme einer Blutprobe der verschlossene Blutprobenbehälter 15 durch die Öffnung 21 in den dahinter befindenden Raum 24 der Recheneinheit 22 eingeführt wird.

Wenn sich der Blutprobenbehälter 15 im Raum 24 befindet, werden die Daten durch eine Druckereinrichtung 20 vorzugsweise in der Form eines Barcodes auf den Behälter 15 aufgedruckt. Vorzugsweise erfolgt dies automatisch dadurch, daß der Aufdruckvorgang initialisiert wird, wenn beim völligen Einführen des Behälters 15 in den Raum 24 ein schematisch dargestellter Schaltkontakt 23 oder eine andere Fühleinrichtung betätigt wird.

Zudem wird vorzugsweise dafür Sorge getragen, daß zur Erhöhung der Sicherheit die Recheneinheit 22 mit Sensoreinrichtungen 30 versehen ist, die die Art des eingeführten Behälters 15 (z.B. Serum-Chemieröhrchen oder Blutbildröhrchen etc.) erkennen. Dadurch wird eine Überprüfung auf Übereinstimmung der zuvor eingegebenen Bestimmungsinformationen mit der hierfür geeigneten Behälterart vorgenommen. Beispielsweise sprechen die genannten Sensoreinrichtungen 30 auf Farbe oder Form des Behälters an.

Es wird darauf hingewiesen, daß in die Öffnung 21 anstelle des Probenbehälters 15 auch ein Meßergebnisträger eingeführt werden kann.

Im folgenden wird im Zusammenhang mit der Figur 4 näher erläutert, wie der derart gekennzeichnete Blutprobenbehälter 15 im Blutuntersuchungslabor in an sich bekannter Weise weitergehandhabt wird. Mit der Hilfe einer Scannereinrichtung 16 wird der Barcode 14 des Behälters 15 in eine Recheneinheit 17 ausgelesen. In dieser Recheneinheit 17 wird den Informationen des Barcodes 14 z.B. eine sogenannte Tagesnummer zugeordnet, die beispielsweise die Reihenfolge der Bearbeitung der Blutprobe im Untersuchungslabor festlegt. Die Tagesnummer und die aus dem Barcode 14 ausgelesene Informationen werden von der Recheneinheit 17 einen Zentralcomputer 18 zugeführt, der aus diesen Daten die für die nicht näher dargestellten Blutuntersuchungen erforderlichen Steuersignale für die verschiedenen Untersuchungs- bzw. Bestimmungsgeräte an einer Leitung 19 ausgibt.

Es wird darauf hingewiesen, daß die Speichereinrichtung 1 an der Stelle des beschriebenen Magnetstreifens auch andere Speichermedien aufweisen kann. Im einfachsten Fall kann die Speichereinrichtung 1 die Form eines Lochstreifens besitzen oder auch ein handelsüblicher Speicherchip mit einem RAM-Speicher sein.

Es wird ferner darauf hingewiesen, daß das vorliegenden System nicht auf die Kennzeichnung und Handhabung von Blutprobenbehältern beschränkt ist. Vielmehr ist es auch im Zusammenhang mit der Identifizierung von Röntgen- oder Ultraschallaufnahmen sowie z.B. von EKG- oder EEG-Meßergebnissen einsetzbar.

## Patentansprüche

1. Verfahren zum Zuordnen von Patientenproben und/oder Meßergebnissen eines Patienten zu Patienteninformationen, die beim Einliefern eines Patienten in ein Krankenhaus, eine Klinik oder dergleichen mit einem Eingabegerät (6) in einen als Speichereinrichtung (1) dienenden Datenträger eingegeben werden, bei dem der Datenträger während des Aufenthaltes des Patienten in dem Krankenhaus, der Klinik oder dergleichen bei dem Patienten verbleibt und zum Zuordnen die Patienteninformation mit einer Ausleseeinrichtung (8) aus der Speichereinrichtung (1) ausgelesen und auf einen weiteren Datenträger übertragen werden, der an einem die Patientenprobe enthaltenden Probenbehälter (15) bzw. einem Meßergebnisträger befestigbar oder Bestandteil des Probenbehälters bzw. des Meßergebnisträgers ist.

2. Verfahren nach Anspruch 1, dadurch gekennzeichnet, daß die Speichereinrichtung (1) an einem am Arm des Patienten befestigbaren Armband (3) angeordnet ist.

3. Verfahren nach Anspruch 1, dadurch gekennzeichnet, daß die Speichereinrichtung (1) an einer am Hals des Patienten zu tragenden Kette befestigt ist.

4. Verfahren nach einem der Ansprüche 1 bis 3, dadurch gekennzeichnet, daß die Speichereinrichtung (1) einen Magnetstreifen (2) aufweist, in den die Patienteninformationen eingebbar sind.

5. Verfahren nach einem der Ansprüche 1 bis 3, dadurch gekennzeichnet, daß die Speichereinrichtung (1) die Form eines Lochstreifens aufweist, in den die Patienteninformationen eingebbar sind.

6. Verfahren nach einem der Ansprüche 1 bis 3, dadurch gekennzeichnet, daß die Speichereinrichtung (1) die Form eines Speicherchips mit einem RAM-Speicher aufweist, in den die Patienteninformationen eingebbar sind.

7. Verfahren nach einem der Ansprüche 1 bis 6, dadurch gekennzeichnet, daß die Patienteninformationen Persönliche Patientendaten und eine Patientenidentifikationsnummer umfassen.

8. Verfahren nach einem der Ansprüche 1 bis 7, dadurch gekennzeichnet, daß die aus der Speichereinrichtung (1) ausgelesenen Patienteninformationen in einer Recheneinheit (10) mit weiteren Daten verknüpft werden und daß die Recheneinheit (10) die Patienteninformationen und die weiteren Daten auf den weiteren Datenträger (13) überträgt.

9. Verfahren nach Anspruch 8, dadurch gekennzeichnet, daß der weitere Datenträger (13) die Form eines Klebeetikettes aufweist, das auf dem die Meßergebnisse beinhaltenden Träger (15) befestigt wird.

10. Verfahren nach Anspruch 8 oder 9, dadurch gekennzeichnet, daß der weitere Datenträger (13) die Patienteninformationen und die weiteren Daten in der Form eines Barcodes (14) aufweist oder in einem Magnetstreifen oder in einem RAM-Speicher enthält.

11. Verfahren nach einem der Ansprüche 8 bis 10, dadurch gekennzeichnet, daß der die Patientenproben beinhaltende Probenbehälter (15) ein Blutprobenbehälter bzw. der Meßergebnisträger ein Ultraschall- oder Röntgenbild oder ein EKG- oder EEG-Bildträger ist.

12. Verfahren nach einem der Ansprüche 8 bis 11, dadurch gekennzeichnet, daß die weiteren Daten in einem Zeitglied (9) erzeugte Zeitdaten sind.

13. Verfahren nach einem der Ansprüche 8 bis 12, dadurch gekennzeichnet, daß die weiteren Daten Daten über die Art der Auswertung der Meßergebnisse sind.

14. Verfahren nach Anspruch 13, dadurch gekennzeichnet, daß die Daten über die Art der Auswertung der Meßergebnisse in die Recheneinheit (10) über eine Tastatur (11) eingebbar sind.

15. Verfahren nach einem der Ansprüche 8 bis 14, dadurch gekennzeichnet, daß die Recheneinheit (22) die Form einer einen Probenbehälter (15) oder Meßergebnisträger in einem Raum (24) aufnehmenden Einrichtung aufweist, die eine Ausleseeinrichtung (20) besitzt, die die Patienteninformationen und die weiteren Daten direkt auf den Probenbehälter (15) oder Meßergebnisträger ausliest.

16. Verfahren nach Anspruch 15, dadurch gekennzeichnet, daß die Ausleseeinrichtung (20) eine Druckereinrichtung ist, die die Patienteninformationen und die weiteren Daten vorzugsweise in der Form eines Barcodes auf den Probenbehälter (15) oder den Meßergebnisträger aufdruckt, wenn sich dieser im Raum (24) in einer durch eine Fühleinrichtung (23) ermittelten Sollage befindet.

17. Verfahren nach Anspruch 15 oder 16, dadurch gekennzeichnet, daß die Recheneinheit (22) eine die Art des Probenbehälters (15) oder Meßergebnisträgers erfassende Sensoreinrichtung (30) aufweist, die nur bei einer vorgegebenen Behälterart oder Trägerart die Ausleseeinrichtung (20) freigibt.

18. Verfahren nach einem der Ansprüche 1 bis 17, dadurch gekennzeichnet, daß die Speichereinrichtung (1) so am Patienten befestigt wird, daß sie während des Aufenthaltes des Patienten in dem Krankenhaus, der Klinik oder dergleichen unentfernbar am Körper des Patienten verbleibt.

19. Verfahren nach Anspruch 18 in Verbindung mit Anspruch 2, dadurch gekennzeichnet, daß das Armband (3) nach dem Befestigen am Patienten vernietet wird.
